# EUROPEAN PATENT APPLICATION

(11) **EP 2 793 160 A1**
(43) Date of publication of application: **22.10.2014**
(21) Application number: 13305519.4
(22) Date of filing: 19.04.2013
(51) Int. Cl.: G06F 21/51

(54) **Method and device for verification of an application**

(71) Applicant: Thomson Licensing, 92130 Issy-les-Moulineaux (FR)
(72) Inventor: Monsifrot, Antoine, 35576 Cesson-Sévigné (FR); Maetz, Yves, 35576 Cesson-Sévigné (FR); Durand, Alain, 35576 Cesson-Sévigné (FR)
(74) Representative: Huchet, Anne

(57) **Abstract**

A device (120) verifies an application downloaded (S204) from an application provider (110) by generating (S208) a digest for the application and sending (S210) the digest to a verification server (130) that uses the digest to look up stored information about the application. In case the verification server (130) stores no information about the application, it requests (S216) the application code from the device, analyzes (S220) the application. The verification server then returns (S214) the information to the device that determines (S224), using the information, whether or not there is a problem with the application and then executes (S228) the application in case there is no problem with the application. The device preferably verifies the application before each launch thereof. The invention permits a user to choose the entity that verifies the application and also to choose the verification criteria, such as security, morality, nudity and religion.

## Description

### TECHNICAL FIELD

The present invention relates generally to software applications and in particular to security verification of such applications.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It has long been known to download and execute applications on computers. Such applications comprise applications bought from a software provider, freeware and shareware found on various web sites and plug-ins necessary to access content on a web site. It will be appreciated that it is desirable to be able to verify that a downloaded application is secure, since malicious applications may steal sensitive data or perform other malicious activities.

A first known method is to make the verification on the client device, by using anti-virus mechanism that relies on a blacklist that identifies all the applications known to be unsafe. Applications are differentiated by the result of a computation on the application itself that allows to generate a digest (e.g. cryptographic hash of the binary file - see for example US 7577848 B2 and US 2004/0199508 A1) that will be used as identifier. Before launching a new application, the digest of this candidate application is computed and compared to the blacklist. If a match occurs, then the application is considered to be unsafe and is not launched. If no match occurs, then the application is considered to be safe and can be launched. The success of such method is highly dependent on the accuracy of the blacklist. This list should be updated very frequently and should reference as many unsafe applications as possible. Establishing and maintaining this list is a difficult task.

There are multiple issues with these anti-virus techniques. In some cases, the antivirus is not sufficiently efficient or is not regularly and sufficiently updated. The update of the backlist itself may not be frequent enough. Especially the latter cases may lead to the installation of malicious apps.

Another way of ensuring security is to provide so-called trusted applications (as opposed to non-trusted applications) and to authorize the launch or installation of trusted applications only. In such a system, before being made available for download, applications are first analyzed by a trusted verifying party - such as a software provider, a device manufacturer or a service operator. The analysis can be done by manually inspecting the source code or by using automated checks either at source code level or at run-time, and verifies the compliance of applications to the security policies defined by the verifying party. These applications are cryptographically signed when they are considered as safe, indicating that the application is secure (according to the signing party). This signature is generally embedded with the application. Before launching any application, the device verifies the signature embedded the application. If the application is not signed or if the signature is invalid, the application is not launched. The signature may also expire or can be revoked.

With the advent of smart phones and tablets, it has become very common to download applications from so-called app stores. Some app stores perform security verifications to check the compliance of applications to the security policies defined by the app store. Although this is a common trend, it is not yet systematic. Some app stores do not perform such verifications. Moreover it is also possible that users launch web applications directly from their browsers. In these cases no security verification is performed.

It will however be appreciated that even the cases that do provide security measures have some drawbacks. For example, it is usually not possible for a user to know how or on which criteria an app store or a signing party verified an application, nor can the user choose the party that performs the verification. This can result in installing applications that are actually harmful for the host device. In addition, for the solution using anti-virus programs, these run on the user's device, handle a database of virus signatures and regularly check the files locally stored on the computer, the incoming files, the memory, etc. It will be appreciated that this process is likely to reduce the performances (including battery life) of the device while the verification is performed, which in particular is an issue for embedded devices.

There are also web sites and tools, such as System Explorer, that enables exploration and management of System Internals. They essentially use a hash value of an application as an identifier in order to provide details and reviews for applications. However, such tools merely aid knowledgeable users.

It will thus be appreciated that there is a need for a solution for verification of a downloaded application that overcomes at least some of the drawbacks of the prior art. The present invention provides such a solution.

### SUMMARY OF INVENTION

In a first aspect, the invention is directed to a method of verifying an application. A device obtains the application; generates a digest for the application; sends the digest to a verification server; receives information about the application, the information being sent by the verification server; and determines using the information whether or not there is a problem with the application.

In a first embodiment, the device executes the application in case there is no problem with the application.

In a second embodiment, after the step of sending the digest to the server, the device receives a request for the application from the verification server; and sends in response to the request, the application to the verification server.

In a third embodiment, the device also sends a name of the application to the verification server.

In a fourth embodiment, the device displays a message on a user interface to notify a user about a problem with the application. It is advantageous that the device receives instructions from a user to execute the application; and executes the application.

In a fifth embodiment, before a future launch of the application, the device obtains a digest for the application; sends the digest to the verification server; receives information about the application, the information being sent by the verification server; determines using the information whether or not there is a problem with the application; and launches the application in case there is no problem with the application.

In a second aspect, the invention is directed to a device for verification of an application. The device comprises a processor configured to: obtain the application; generate a digest for the application; send the digest to a verification server; receive information about the application, the information being sent by the verification server; and determine using the information whether or not there is a problem with the application.

In a first embodiment, the processor is further configured to execute the application in case there is no problem with the application.

In a second embodiment, the processor is further configured to: receive a request for the application from the verification server; and send in response to the request, the application to the verification server.

In a third embodiment, the processor is further configured to display a message on a user interface to notify a user about a problem with the application. It is advantageous that the processor is further configured to: receive instructions from a user to execute the application; and execute the application.

In a fourth embodiment, the processor is further configured to, before a future launch of the application: obtain a digest for the application; send the digest to the verification server; receive information about the application, the information being sent by the verification server; determine using the information whether or not the application is deemed secure; and launch the application in case there is no problem with the application. It is advantageous that the processor maintains a list of information for installed applications; and uses the information in the list in case the verification server cannot be reached.

In a fifth embodiment, the information about the application comprises information about problems regarding at least one of security, morality, nudity and religion.

### BRIEF DESCRIPTION OF DRAWINGS

Preferred features of the present invention will now be described, by way of non-limiting example, with reference to the accompanying drawings, in which
Figure 1 illustrates a system for application verification according to a preferred embodiment of the present invention; and
Figure 2 illustrates a method for application verification according to a preferred embodiment of the present invention.

### DESCRIPTION OF EMBODIMENTS

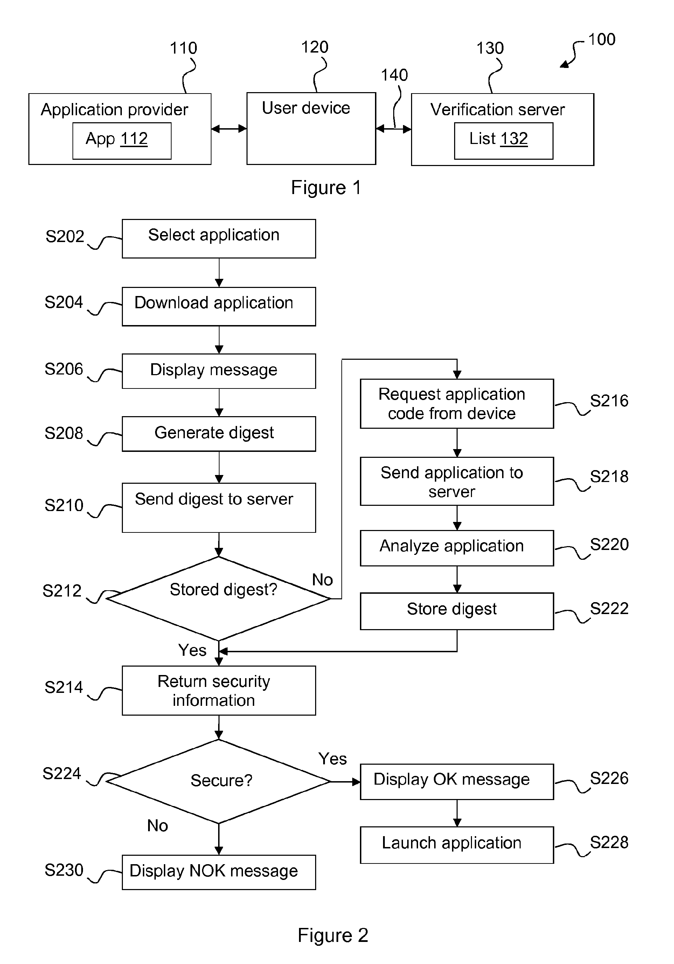

Figure 1 illustrates a system 100 for application verification according to a preferred embodiment of the present invention. The system comprises an application provider 110 (such as, for example, an app store) storing an application 112, a user device 120 and a verification server 130. It will be understood that a real-life system could comprise a plurality of application providers (storing a plurality of applications), a plurality of user devices (belonging to a plurality of users) and a plurality of verification servers. It will also be understood that, although not illustrated in Figure 1 for the sake of clarity, the application provider 110, the user device 120 and the verification server 130 comprise the necessary hardware and software resources for performing their respective functions, such as for example communication interfaces, processors, memory, operating systems and user interfaces.

The application provider 110 stores the application 112 and is configured to send the application 112 to the user device 120, possibly upon a specific request. The user device 120 is configured to download the application 112 and to request verification of the application 112 from the verification server 130 that is configured to verify the application 112, as further described hereinafter.

As the present invention is best described using an example, an exemplary verification method is illustrated in Figure 2.

The user selects S202 an external un-trusted application 112 to be launched on the user device 120, either from the Internet or from a removable media such as a CD-ROM. The user device 120 then sends a request to the application provider that provides the requested application 112. However, the application can also be selected 'automatically' if the user device 120 is configured to automatically load certain applications. A typical case is a web application using HTML5, Cascading Style Sheets (CSS) and JavaScript technologies. The application is downloaded S204 to the device and stored in a temporary memory area.

The user device 120 preferably displays S206 a waiting message to inform the user that the application has been downloaded and that its verification has started.

The user device 120 then computes S208 a digest (e.g. a hash value) from the application code, as is well known in the art, and sends S21 0 the digest to the verification server 130, preferably using a secure link 140 (such as a prior art Secure Authenticated Channel, SAC) that offers authentication of the server, as well as confidentiality and integrity of the data exchanged over the secure link. It will be appreciated that the user device 120 can receive the identity (and, if necessary, the address) of the verification server 130 from the user. It will also be appreciated that the user is free to select its preferred verification server, depending e.g. on the type of the security verifications that it performs.

In a variant embodiment, the user device 120 also sends a name of the application 112 to the verification server 130. The skilled person will appreciate that the name itself offers no guarantees as to the content of the application, but it can aid the verification server 130 in the analysis of the application as will be described hereinafter.

The verification server 130, which may be handled by a trusted third party, the manufacturer of the user device or a service operator, manages a list 132 of applications. The list 132 comprises at least one digest for each application and a flag indicating a result of the verification of the application. The verification server 130 determines S212 if the received digest is in the list 132. It will be understood that if the digest does not appear in the list, then the corresponding application has not yet been verified.

If the list 132 comprises the received digest (which means that the application has been analysed), then the verification server 130 retrieves and sends S214 the corresponding flag (or other indication of the security of the application) to the user device 120.

On the other hand, if the list 132 does not comprise the received digest, then the verification server 130 requests S216 the application 112 from the user device 120 that returns S218 the application.

The verification server 130 then performs an analysis S220 of the code of the application to find, among other things, security problems. The analysis can comprise one or more activities such as for example static analysis, analysis of security policies and analysis of known vulnerabilities. It will be understood that the analysis may be complex and need much computing time and processing power. It will also be understood that since application analysis *per se* is known in the art, the exact nature of the analysis is out of the scope of the present invention.

In the variant embodiment, using the name of the application, the verification server 130 may determine if it stores further applications having the same name but different digests. In this case, the analysis may be facilitated as the verification server 130 may compare the code of the application to analyse with the code of analysed applications; this can, in certain cases, enable the verification server to focus on the parts of the code that are different if the 'reference' application is deemed secure.

In a basic embodiment of the present invention, the outcome of the analysis is either OK - i.e. that no security problem was detected or that the security risk is considered to be acceptable - or NOK - i.e. at least one security problem was found. In a variant embodiment, several security levels are used: for example, when a known vulnerability is found but the vulnerability is minor, difficult to exploit or has not yet been exploited, the analysis could result in a third value, possibly along a grade level. The verification server 130 updates S222 the list 132 with the digest and the flag corresponding to the outcome of the analysis.

The verification server 130 then sends S214 the result of the security analysis, that is the corresponding flag (or other indication of the security of the application), to the user device 120.

Upon reception of the flag, the user device 120 checks S224 its value. In case the application 112 is secure - i.e. the flag is "OK" - this is preferably indicated S226 to the user and the user device (installs and) executes S228 the application. In case the application 112 is insecure - i.e. the flag is "KO" - this is preferably indicated S230 to the user by display on a user interface (advantageously along with an explanation of the security problems of the application) and the user device does not launch the application 112. It is possible to allow the user to give instructions that cause the user device 120 to (install and) launch (i.e. execute) the application in spite of the security problems, but in this case the user is at least aware of the risks.

It will be also appreciated that, prior to sending the digest for verification, the user device can establish a secure channel (e.g. TLS) with the verification server. This secure channel will allow securing the flag transmission to the user device.

In a preferred embodiment, the user device 120 requests verification of the application 112 before each future launch thereof. To do this, the user device 120 calculates or, possibly, extracts a stored digest for the application and sends the digest to the verification server 130. The verification server 130 behaves as described hereinbefore. Normally, the verification server 130 already stores the digest, but it is possible that the application has been modified in which case the digest is different; the verification server then requests the application as previously described. It will be appreciated that this mechanism can provide two further advantages: the application is analysed again in case it has been modified and it is possible to alert the user about security problems discovered since the user device last requested analysis of the application. To achieve the latter advantage, the verification server 130 should preferably store the applications so that it can perform further active or passive (e.g. by retrieving information from a dedicated forum) analysis of them, for example by new or updated analysis tools. It will be appreciated that there is no need to update anything on the user device 120 to achieve this.

It is to be noted that it is likely that the first security verification of the application is done by the application provider 110 to verify that the application is correctly uploaded and runs correctly. In this case, there is no need for the user to wait for verification, provided that the application provider 110 is trusted and also manages the verification server 130. In this case, it is preferred that the developer provides the source code and the compilation method, since this allows a much more precise analysis that in addition could reduce the number of false positives security alerts.

It may happen that a given version of an application that was verified successfully one day is no longer considered secure the next day. This can happen when new vulnerabilities are found or an exploit on this application was made public. In this case, the flag for this entry is changed from OK to KO and if the user tries to launch it again, the server will no more answer OK but KO and the application will not be launched, despite the fact that it is the same application as the day before.

It may also happen that new, major threats are discovered, in which case the verification server may choose to reset its list of verified applications. It will therefore re-verify each application against these new major threats.

As it may happen that the verification takes a long time, in a variant embodiment the verification server 130 stores a further list of (names and) digests of applications in the process of being verified and the user devices that have requested analysis of them. This list is consulted when receiving a request from a user device so as to avoid starting a second, simultaneous verification of the same application. When the analysis is complete, the verification server 130 notifies each device that, according to the list, has requested analysis of the application.

The list 132 of digests and flags (or more detailed security information) can also store further information. Examples of such information for an application comprise: a timestamp for the latest analysis, a timestamp for the latest request, a counter of the number of verification requests, and the time needed to analyse the verification. The further information can help define a strategy for the removal of elements when the list 132 fills up - for example, old, unused applications can be removed from the list.

The skilled person will appreciate that the analysis may also concern other topics than security, such as morality, nudity and religion. For example, the character strings used within the application can be tested against a dictionary of forbidden words, the images or videos can be checked by nudity detection algorithms. If this variant is implemented, the user can select the verification server that suits his needs and the type of verification to be done.

In a preferred embodiment, the user device 120 maintains a list of the flag (and other information) received from the verification server 130. This can allow the user device 120 to verify the security of an application when the user device 120 is off-line (and thus cannot contact the verification server 130). In this case, it is preferred that the user device requests from the verification server 130 'external' verification of the applications that it has verified 'internally' at a time when the user device goes online again. This ensures synchronization between the information in the list 132 of the verification server 130 and the list kept by the user device 120.

In a further embodiment, the user can set the user device 120 to request verification according to certain criteria. This can for example make it possible to request a lighter and thus faster verification - leading to a small delay. In this case, the verification server 130 can be configured to use the lighter criteria in case the application 112 needs to be analysed and then, once the result has been sent to the user device 120, also perform a 'heavier' verification. It will be understood that the criteria can be 'hierarchic' in the sense that a heavier analysis comprises everything of a lighter analysis.

As can be seen for the description hereinbefore, the present invention provides automated security analysis of (particularly non-trusted) applications before execution. The analysis is done by a remote verification server so that the verification results are shared amongst users. The operation can be nearly transparent to the user, except for the choice of the verification server and for a potential waiting phase during the first verification of the application; the waiting phase is unnoticeable in the case where the application has already been verified. The verification server is preferably handled by a trusted party chosen by the user but it could also be the service provider.

Since the verification server handles a list of verified applications and associated information, it is possible to minimize the global number of analyses performed and to adapt to new vulnerabilities (an application for which a new vulnerability is discovered can be removed easily from the list of 'secure' applications).

It will be appreciated that the present invention can:
- allow users to select a verification server and thus not be bound to a specific server;
- provide a mechanism for ensuring security analysis of trusted or non-trusted applications to be executed on a user device;
- provide a more precise analysis in the case where the developer provides the source code of the application; and
- allow the user to check an application before the first execution.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of verifying an application (112), the method comprising the steps, in a device (120), of:
obtaining (S204) the application;
generating (S208) a digest for the application;
sending (S210) the digest to a verification server (130);
receiving (S214) information about the application, the information being sent by the verification server; and
determining (S224) using the information whether or not there is a problem with the application.

2. The method of claim 1, further comprising the step of executing (S228) the application in case there is no problem with the application.

3. The method of claim 1, further comprising, after the step of sending the digest to the server, the steps of:
receiving (S216) a request for the application from the verification server; and
sending (S218) in response to the request, the application to the verification server.

4. The method of claim 1, further comprising the step of sending a name of the application to the verification server.

5. The method of claim 1, further comprising the step of displaying (S230) a message on a user interface to notify a user about a problem with the application.

6. The method of claim 5, further comprising the steps of:
receiving instructions from a user to execute the application; and
executing the application.

7. The method of claim 1, further comprising the steps, before a future launch of the application, of:
obtaining a digest for the application;
sending the digest to the verification server;
receiving information about the application, the information being sent by the verification server;
determining using the information whether or not there is a problem with the application; and
launching the application in case there is no problem with the application.

8. A device (120) for verification of an application (112), the device comprising a processor configured to:
obtain the application;
generate a digest for the application;
send the digest to a verification server (130);
receive information about the application, the information being sent by the verification server; and
determine using the information whether or not there is a problem with the application.

9. The device of claim 8, wherein the processor is further configured to execute the application in case there is no problem with the application.

10. The device of claim 8, wherein the processor is further configured to:
receive a request for the application from the verification server; and
send in response to the request, the application to the verification server.

11. The device of claim 8, wherein the processor is further configured to display a message on a user interface to notify a user about a problem with the application.

12. The device of claim 11, wherein the processor is further configured to:
receive instructions from a user to execute the application; and
execute the application.

13. The device of claim 8, wherein the processor is further configured to, before a future launch of the application:
obtain a digest for the application;
send the digest to the verification server;
receive information about the application, the information being sent by the verification server;
determine using the information whether or not the application is deemed secure; and
launch the application in case there is no problem with the application.

14. The device of claim 13, wherein the processor is further configured to:
maintain a list of information for installed applications; and
use the information in the list in case the verification server cannot be reached.

15. The device of claim 8, wherein the information about the application comprises information about problems regarding at least one of security, morality, nudity and religion.
